(19)

Europäisches
Patentamt

European
Patent Office

Office européen
des brevets

(11)   **EP 4 205 935 A1**

(12)   # EUROPEAN PATENT APPLICATION
published in accordance with Art. 153(4) EPC

(43) Date of publication:
**05.07.2023  Bulletin 2023/27**

(21) Application number: **21861369.3**

(22) Date of filing: **19.08.2021**

(51) International Patent Classification (IPC):
**B29B 17/00** *(2006.01)*     **B29B 17/02** *(2006.01)*
**C11D 1/62** *(2006.01)*      **C11D 1/72** *(2006.01)*
**C11D 1/90** *(2006.01)*      **C11D 1/94** *(2006.01)*
**C11D 3/30** *(2006.01)*

(52) Cooperative Patent Classification (CPC):
**B29B 17/00; B29B 17/02; C11D 1/62; C11D 1/72;
C11D 1/90; C11D 1/94; C11D 3/30;** Y02W 30/62

(86) International application number:
**PCT/JP2021/030321**

(87) International publication number:
**WO 2022/044941 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **25.08.2020   JP 2020141783
22.10.2020   JP 2020177226**

(71) Applicant: **DIC Corporation
Tokyo 174-8520 (JP)**

(72) Inventors:
• **SENTE Yasuhiro
Tokyo 174-8520 (JP)**
• **WAKAHARA Keisuke
Tokyo 174-8520 (JP)**
• **KUDO Takaaki
Tokyo 174-8520 (JP)**

(74) Representative: **Gerauer, Marc Philippé
Kraus & Weisert
Patentanwälte PartGmbB
Thomas-Wimmer-Ring 15
80539 München (DE)**

(54)   **INK REMOVER USED TO RECYCLE PLASTIC LAMINATES INTO RECYCLED MATERIALS, INK FILM PEELING METHOD, AND SEPARATION AND RECOVERY METHOD OF PEELED INK FILM**

(57)    Provided is an ink film recovery method including detaching and removing, from a plastic substrate having an ink film, the ink film by using an ink cleaning agent containing water and at least one selected from an amphoteric surfactant and a cationic surfactant, and then recovering the detached ink film, an ink cleaning agent that can be applied to this ink film recovery method, and an ink film detaching method. Ink films printed on plastic substrates can be easily detached and the detached ink films can be easily recovered by using an ink cleaning agent that contains water and at least one selected from an amphoteric surfactant and a cationic surfactant.

EP 4 205 935 A1

**Description**

Technical Field

The present invention relates to an ink cleaning agent used to recycle plastic laminates into recycle material, an ink film detaching method, and a method for separating and recovering detached ink films.

Background Art

Presently, the recycling rate of the plastic wastes sorted and collected from among plastics produced worldwide is 9%. Of 91% of the plastics that were not recycled, 12% was incinerated and 79% was disposed of to landfill or to the environment (NPL 1). One of the reasons why the recycling rate continues to be so low is the issues facing the sorting and recovery system. In order to recycle plastics, plastic wastes containing different types of plastic materials, such as polyethylene (PE) and polypropylene (PP), combined together need to be separated by material type and recovered. However, most plastic products such as laminate films contain different types of plastic materials that are bonded and laminated together, and thus are difficult to separate and recover by material type. Thus, a recycling system that can easily separate and recover plastic wastes is in strong demand.

In addition, plastic products are rarely recycled into the same products from the viewpoint of cost, basically deteriorate every time they are recycled, and have no alternative but to be regenerated into inferior-quality products. One reason for quality degradation of recycled plastics is impurities, such as inks and pigments, that are mixed into the plastics. However, most plastic products have printed surfaces and it is thus difficult to remove colors during the recycling process; as a result, recycled plastic products come with colors. The fact is that such recycled plastics containing pigments, inks, etc., not only have an extremely low commodity value due to coloration but also would only form plastics having degraded physical properties originating in the impurities; thus, a recycling method that can generate high-quality recycled plastics is also desired.

To address these issues, PTL 1 provides an ink mainly composed of a high acid number resin in order to detach, in an alkaline solution, inks printed on plastic products; however, PTL 1 fails to address extensive printability deterioration caused by changes in the composition. PTL 2 provides a method for detaching printed layers from plastic products, the method involving stirring in a hot alkaline solution; however, in order to detach printed layers, releasing layers composed of a high acid number resin must be present underneath the printed layers. In these studies, high acid number resins such as fumaric acid, phthalic acid, and maleic acid are used in the inks and/or releasing layers; however, releasing layers must be formed in preparing the laminate films, and thus this approach is not considered the best in view of both the process and the cost.

Meanwhile, in order to dissolve paints and resin films, PTL 3 uses, as an alkaline cleaning agent that can clean steel plates, a 5% aqueous sodium hydroxide solution containing a polyoxyethylene alkyl ether as an additive. Furthermore, in PTL 4 to PTL 7, a cleaning solution that contains an amine compound, water, and a glycol ether is used to suit the purpose. However, even these cleaning agents described as examples could not detach ink films printed on films targeted by the present application.

Citation List

Non Patent Literature

NPL 1: Science Advances, 19 Jul 2017: Vol. 3, No. 7, e1700782

Patent Literature

PTL 1: Japanese Unexamined Patent Application Publication No. 2001-031899
PTL 2: International Publication No. 2020/066652
PTL 3: Japanese Unexamined Patent Application Publication No. 10-280179
PTL 4: Japanese Unexamined Patent Application Publication No. 08-123043
PTL 5: Japanese Unexamined Patent Application Publication No. 08-245989
PTL 6: Japanese Unexamined Patent Application Publication No. 09-087668
PTL 7: Japanese Unexamined Patent Application Publication No. 2006-83351

Summary of Invention

Technical Problem

Most of cleaning agents of the related art have been developed to dissolve dry paint in the pipes or dissolve etching resist resins, and are not intended to detach ink films printed on plastic substrates such as films; furthermore, these cleaning agents did not have such an effect. In addition, in order to obtain high-quality recycled plastics and in order to reuse the cleaning agents, plastic substrates and ink films must be individually separated and recovered from the cleaning agents after detaching the ink films; however, most of related art techniques do not target plastic laminates with ink films formed on plastic substrates as the cleaning subject, and thus do not consider individually recovering plastic substrates and detached ink films.

Furthermore, as packaging materials have become increasingly diverse in recent years, there is higher demand for improving adhesion of ink films to plastic substrates and for high designability of printed goods; thus, the ink types have become increasingly diverse, and ink films with multiple colors and multiple layers are becoming increasingly commonplace. Such trends make detachment of ink films even more difficult. For example, inks can be roughly categorized into thermoplastic inks and thermosetting inks depending on the type of the resin used, and ink films composed of thermosetting inks are more difficult to detach since the ink films form strong bonds and tightly adhere to plastic substrates. Thus, there is demand for a method with which ink films of various types can be detached.

However, for example, the ink film detaching methods described in PTL 1 and PTL 2 involve using an ink mainly composed of a high acid number resin or detaching the ink by using releasing layers mainly composed of a high acid number resin; thus, there are limits to the types of the ink and the layer structure that can be detached. This indicates that most of the cleaning agents that have been developed thus far can detach ink films of a particular type, and no cleaning agent that can act on thermosetting and thermoplastic ink films is known.

Thus, a technical problem to be addressed by the present invention is to provide an ink film recovery method with which ink films of various types printed on plastic substrates can be easily detached and the detached ink films can be easily recovered, an ink cleaning agent that can be applied to this ink film recovery method, and an ink film detaching method.

Solution to Problem

The inventors of the present invention have conducted extensive studies to address the issues described above, and have arrived at a method for separating and recovering, from plastic substrates having ink films, only the ink films by causing the ink films to readily detach and settle out in a particular cleaning agent.

In addition, the inventors have found a method for separating and recovering only ink films from plastic substrates having not only thermoplastic ink films but also thermosetting ink films (hereinafter, a thermosetting ink film is referred to as an "ink cured film") by causing the ink films to easily detach and settle out.

In other words, the present invention provides an ink film recovery method including detaching and removing, from a plastic substrate having an ink film, the ink film by using an ink cleaning agent containing an amphoteric surfactant and water, and then recovering the detached ink film.

The present invention also provides an ink cleaning agent used in an ink film recovery method, the ink cleaning agent containing an amphoteric surfactant and water.

The present invention also provides an ink film detaching method including detaching and removing, from a plastic substrate having an ink film, the ink film by using an ink cleaning agent used in an ink film recovery method.

Advantageous Effects of Invention

According to the present invention, from a plastic substrate having an ink film, the ink film can be easily separated and settled out simultaneously, and the plastic substrate and the ink film can be separately recovered, sorted, and reused. Thus, a plastic substrate that does not have an ink attached thereto can be easily recovered, and the quality of recycled plastics can be improved. In addition, the ink film recovery process can be streamlined, and the reuse of the cleaning agent can be simplified.

Description of Embodiments

According to the ink film recovery method and the ink film detaching method of the present invention, step 1 (ink film detaching step) described below is performed by using a wet crusher that can simultaneously shred plastic laminates and separate the plastic laminates into single layers, or by immersing, stirring, applying ultrasonic waves, etc., while using a cleaning agent that contains water and at least one selected from an amphoteric surfactant and a cationic surfactant.

The simplest and easiest method for removing ink films from plastic substrates is to dissolve the ink films with a solvent or the like; however, the cost of the solvent is high if ink films are to be industrially dissolved with a solvent, and so is the environmental load. One method for detaching without dissolving is to detach ink films by using a water-soluble organic solvent containing a water-based cleaning agent; however, this method has been found to be a not-so-convenient solution since the ink films may partly dissolve into the cleaning agent, thereby making separation and recovery of the ink films difficult, and the conditions are required under which the cleaning agent must be kept at a high temperature of 70°C or higher for as long as 30 minutes or longer.

Furthermore, ink cleaning agents known heretofore are applicable only to the case where the ink printed on plastic substrates is of a thermoplastic type, and could not be used to clean ink cured films.

The inventors of the present invention have studied various ink cleaning agents and thus found that, when an ink cleaning agent that contains an amphoteric surfactant and water is used, ink films can be detached from plastic substrates at a lower temperature in a shorter time than in existing methods. Moreover, the inventors have found that films can be detached from multi-color printed matter and overlay printed matter on which multiple ink films are stacked, although this has been difficult in the existing methods.

It has also been found that, by using an ink cleaning agent that contains a cationic surfactant and water, it becomes possible to detach films from multicolor prints and overlay prints constituted by multiple ink films which have been difficult to detach by existing methods, and to detach films from prints made by using thermosetting inks which have been difficult to detach with existing cleaning agents.

Specific embodiments of the present invention will now be described; however, the present invention is not limited to the specific examples described below.

<Ink cleaning agent>

The ink cleaning agent used in the present invention can easily detach, from plastic substrates having ink films, the ink films, and is used to recover, sort, and recycle the plastic substrates from which the ink films had been detached. The ink cleaning agent contains water and an amphoteric surfactant.

Here, detaching ink films refers to a state in which, in the ink film detaching step, the ink films detached from the plastic substrates remain undissolved in the ink cleaning agent.

In the present invention, ink films can be detached without being dissolved by using one of an amphoteric surfactant and a cationic surfactant. Since the cleaning agent can maintain transparency, plastic substrates and ink films can be easily recovered, and, when recovering plastic substrates, ink components and dissolved components of the inks can be prevented from attaching to the plastic substrates. Since the ink coating films remain undissolved, films in a clean state can be recovered, and the cleaning agent can be reused without a special recycling step. Moreover, since the detached ink films settle out in the cleaning agent and the amphoteric surfactant has excellent wettability to the ink films, the ink films can be detached notably faster than when other surfactants are used, and thus the operation time can be shortened.

(Amphoteric surfactant)

The type of the amphoteric surfactant that can be used in the cleaning agent of the present invention is not particularly limited, and any known amphoteric surfactant can be used. Specifically, the amphoteric surfactant is preferably a betaine-type amphoteric surfactant, and, for example, an alkylcarboxybetaine skeleton or alkylamidecarboxybetaine skeleton amphoteric surfactant that contains at least one compound represented by general formula (1a) is more preferable.

$$R1\text{-}R2\text{-}N^+(CH_3)_2CH_2COO^- \qquad (1a)$$

(In general formula (1a), R1 represents hydrogen or C(=O)R3-NH- (R3 represents a linear or branched alkyl or alkenyl group), and R2 represents an alkylene group or an alkenylene group.)

In general formula (1a), R1 preferably represents a hydrogen atom.

An alkylcarboxybetaine skeleton amphoteric surfactant containing a compound represented by general formula (1a-1) as the compound represented by general formula (1a) is preferable.

$$C_nH_{2n+1}N^+(CH_3)_2CH_2COO^- \qquad (1a\text{-}1)$$

(In general formula (1), n represents an average number of moles added.)

In general formula (1-1a), n is preferably 8 or more and preferably 10 or more, and preferably 11 or more.

Specific products that correspond to general formula (1a) include products of NOF CORPORATION such as NISSAN ANON BDF (registered trademark)-R, NISSAN ANON BDF (registered trademark)-SF, NISSAN ANON BDC-SF, and NISSAN ANON BDL-SF, products of DKS Co. Ltd., such as AMOGEN CB-H and AMOGEN HB-C, products of New Japan Chemical Co., Ltd., such as RIKABION B-200 and RIKABION B-300, and products of TOHO Chemical Industry Co., Ltd., such as OBAZOLIN CAB-30 and OBAZOLIN ISAB. Specific products that correspond to general formula (1a-1) include products of DKS Co. Ltd., such as AMOGEN S, AMOGEN S-H, and AMOGEN K, products of KAO Corporation such as AMPHITOL 20BS, AMPHITOL 24B, and AMPHITOL 86B, products of NOF CORPORATION such as NISSAN ANON BF, NISSAN ANON BL, and NISSAN ANON BL-SF, products of New Japan Chemical Co., Ltd., such as RIKABION A-100, RIKABION A-200, and RIKABION A-700, and products of TOHO Chemical Industry Co., Ltd., such as OBAZOLIN LB AND OBAZOLIN LB-SF; however, these products are not limiting.

The betaine-type amphoteric surfactant may have an imidazolinium betaine skeleton, and specific products that correspond to this surfactant include products of NOF CORPORATION such as NISSAN ANON GLM-R and NISSAN ANON GLM-R-LV, and products of KAO Corporation such as AMPHITOL 20Y-B; however, these products are not limiting.

The amphoteric surfactant may be a surfactant represented by general formula (1b) below:

$$R4\text{-}(NHC_2H_4)_{nb}\text{-}N(R5)_2 \qquad (1b)$$

(In general formula (1b), R4 represents a linear or branched alkyl or alkenyl group, nb represents an integer of 0 to 5, R5 represents hydrogen, $-CH_2COONa$, or $-CH_2COOH$, two R5 present may be the same or different, and at least one of two R5 represents $-CH_2COONa$.)

In general formula (1b), R4 preferably represents a linear alkyl group, and the number of carbon atoms in R4 is preferably 8 or more, preferably 10 or more, and preferably 12 or more.

Specific products that correspond to general formula (1b) include products of NOF CORPORATION such as NISSAN ANON LG-R and NISSAN ANON LA; however, these products are not limiting.

Furthermore, the amphoteric surfactant may be an amine oxide-type surfactant represented by general formula (1c) below:

$$R6\text{-}N^+(CH_3)_2O^- \qquad (1c)$$

(In general formula (1c), R6 represents a linear or branched alkyl or alkenyl group.)

In general formula (1c), R6 preferably represents a linear alkyl group of R4 in general formula (1b), and the number of carbon atoms in R4 is preferably 8 or more, preferably 10 or more, and preferably 12 or more.

Specific products that correspond to general formula (1c) include products of DKS Co. Ltd., such as AMOGEN AOL and products of KAO Corporation such as AMPHITOL 20N; however, these products are not limiting.

These amphoteric surfactants can be used alone or in combination as a mixture. The amount thereof added relative to the total amount of the ink cleaning agent is preferably in the range of 0.01 to 5 wt% and more preferably 0.1 to 2 wt%.

(Cationic surfactant)

The type of the cationic surfactant that can be used in the cleaning agent of the present invention is not particularly limited, and any known cationic surfactant can be used. Specifically, the amphoteric surfactant is preferably a quaternary ammonium skeleton cationic surfactant and more preferably contains a quaternary ammonium skeleton cationic surfactant containing at least one compound represented by general formula (2a), for example.

$$R1\text{-}N^+(R2R3)\text{-}R4 \qquad (2a)$$

(In general formula (2a), R1 represents a linear or branched alkyl group or a linear or branched alkenyl group, $-CH_2-$ in the alkyl or alkenyl group may be substituted with $-C(=O)-$, $-NH-$, or $-C(=O)-NH-$, R2 and R3 each represent a hydrogen atom, a linear or branched alkyl group, or a linear or branched alkenyl group, R4 represents a hydrogen atom, a linear or branched alkyl group, a linear or branched alkenyl group, or a phenyl group, and a terminal $-CH_3$ in the alkyl or alkenyl group may be substituted with a carboxy group or a phenyl group.)

In order to further improve the ink-detaching property, R1 in general formula (2a) is preferably a long-chain alkyl group or alkenyl group, specifically, preferably an alkyl or alkenyl group having 8 to 30 carbon atoms, preferably an alkyl group having 10 to 25 carbon atoms, and preferably an alkyl or alkenyl group having 12 to 22 carbon atoms. The alkyl group or the alkenyl group may be linear or branched but is preferably linear, and a linear alkyl group is more preferable.

In R1, at least one $-CH_2-$ in the alkyl or alkenyl group may be substituted with $-C(=O)-$, $-NH-$, or $-C(=O)-NH-$.

In particular, at least one -$CH_2$- in the alkyl or alkenyl group is preferably substituted with - C(=O)-NH- or -NH-C(=O), at least one -$CH_2$- in the alkyl group is preferably substituted with -C(=O)-NH- or -NH-C(=O), and, more preferably, an amidopropyl skeleton is contained in R1.

R2 and R3 preferably each represent a linear or branched alkyl group or a linear or branched alkenyl group, and preferably each represent a linear or branched alkyl group. In particular, a linear alkyl group having 1 to 3 carbon atoms is preferable, and a methyl group is more preferable.

R4 preferably represents a linear or branched alkyl group, a linear or branched alkenyl group, or a phenyl group, and more preferably represents a linear or branched alkyl group. The terminal -$CH_3$ in the alkyl group or the alkenyl group is preferably substituted with a carboxy group or a phenyl group.

The number of carbon atoms in R4 is preferably 1 to 8, preferably 1 to 5, preferably 1 to 3, and more preferably 1 or 2.

When R4 represents a methyl group, R2 and R3 preferably also represent methyl groups, and general formula (2a) preferably represents an alkyltrimethylammonium skeleton.

When R4 represents an ethyl group, the terminal -$CH_3$ in the ethyl group is preferably substituted with a carboxy group or a phenyl group. In other words, R4 preferably represents -$CH_2$-(C(=O)OH or a benzyl group.

The compound represented by general formula (2a) is preferably a quaternary ammonium skeleton cationic surfactant represented by general formula (2a-1).

$$C_nH_{2n+1}N^+(CH_3)_2R4 \qquad (2a\text{-}1)$$

(In general formula (2a-1), n represents an average number of moles added, and R4 is the same as R4 in general formula (2a).)

In general formula (2a-1), the number of carbon atoms represented by n is preferably 8 or more. The higher the number of carbon atoms is than 8, the better the ink-detaching property. Specific examples of the number of carbon atoms are 8 in an octyl group, 9 in a nonyl group, 10 in a decyl group, 11 in an undecyl group, 12 in a lauryl group, 13 in a tridecyl group, 14 in a myristyl group, 15 in a pentadecyl group, 16 in a cetyl group, and 18 in an oleyl group and a stearyl group.

Preferable groups for R4 are the same as those for general formula (2a).

These quaternary ammonium skeleton cationic surfactants are preferably of a quaternary ammonium skeleton salt-type in which a salt is formed with a halogen. Preferably, a salt is formed with Cl⁻, more preferably a salt is formed with Br⁻, and yet more preferably, a salt is formed with I⁻. A quaternary ammonium skeleton salt that has formed a salt with a halogen promotes hydrolysis of ink films due to nucleophilic action of the halogen, and presumably thus the ink-detaching property is improved.

In particular, compounds of an alkyl trimethylammonium chloride type, a dialkyl dimethylammonium chloride type, and an alkyl benzalkonium chloride type are preferable.

Specific examples of the products that correspond to general formula (2a) or (2a-1) include, but are no limited to, products of NOF CORPORATION such as NISSAN CATION MA, NISSAN CATION SA, NISSAN CATION BB, NISSAN CATION FB, NISSAN CATION PB-300, NISSAN CATION ABT2-500, NISSAN CATION AB, NISSAN CATION AB-600, NISSAN CATION VB-M flake, NISSAN CATION VB-F, NISSAN CATION 2-DB-500E, NISSAN CATION 2-DB-800E, NISSAN CATION 2ABT, NISSAN CATION 2-OLR, NISSAN CATION F₂-50R, and NISSAN CATION M₂-100R, products of Daiichi Kogyosha Co., Ltd., such as CATIOGEN TML, CATIOGEN TMP, CATIOGEN TMS, CATIOGEN DDM-PG, CATIOGEN BC-50, and CATIOGEN TBB, products of KAO Corporation such as QUARTAMIN 24P, QUARTAMIN 86P conq, QUARTAMIN 60W, QUARTAMIN 86W, SANISOL C, and SANISOL B-50, and products of Lion Corporation such as LIPOQUAD C-50, LIPOQUAD T-28, LIPOQUAD T-30, LIPOQUAD T-50, LIPOQUAD T-800, LIPOQUAD 16-29, LIPOQUAD 16-50E, LIPOQUAD 18-63, LIPOQUAD 22-80, LIPOQUAD CB-50, LIPOQUAD 210-80E, LIPOQUAD 2C-75, LIPOQUAD 2HP-75, LIPOQUAD 2HP flake, LIPOQUAD 2HT-75, LIPOQUAD 2HT flake, LIPOQUAD 20-751, LIPOQUAD 41-50, TMAC-50, TPAH-40, TBAB-50A, TBAB-100A, TBAH-40, LIPOQUAD PH-100, BTMAC-50, BTMAC-100A, BTEAC-50, BTEAC-100A, and BTBAC-50A.

The cationic surfactant preferably contains at least one compound represented by a primary or secondary alkanolamine skeleton, and preferably contains at least one compound represented by a monoalkanolamine skeleton.

The primary monoalkanolamine is preferably a lower alkanol having 1 to 4 carbon atoms. Specific examples include monoethanolamine and 2-aminoisobutanol, specific examples of the secondary monoalkanolamine include N-methylethanolamine, 2-ethylaminoethanol, and isoprpanolamine, and substances other than those listed as examples can also be used as appropriate. These monoalkanolamine compounds can be used alone or in combination as appropriate, and can be mixed with water and used. These monoalkanolamine skeleton cationic surfactants are preferably of a monoalkanolamine salt-type in which a salt is formed with a halogen, and preferably, a salt is formed with Cl⁻.

These cationic surfactants can be used alone or in combination as a mixture. The amount thereof added relative to the total amount of the ink cleaning agent is preferably in the range of 0.01 to 5 wt% and more preferably 0.1 to 2 wt%.

(Other cleaning agents)

The ink film cleaning agent used in the present invention preferably contains one compound selected from an inorganic base (hereinafter referred to as a compound (a)), an alkylene glycol alkyl ether represented by general formula (2) (hereinafter referred to as a compound (b)), and a primary or secondary monoalkanolamine having a boiling point of 150 to 200°C (hereinafter referred to as a compound (c)). By using the amphoteric surfactant and one of the compounds (a) to (c) in combination, the detaching effect can be improved, and the detaching time can be shortened. In particular, the compound (a) is preferably contained, and it is also preferable to use the compound (a) in combination with at least one of the compounds (b) and (c) as appropriate.

(Compound (a))

The compound (a), which is an inorganic base, is preferably contained in an amount of 0.1 to 10 wt% relative to the total amount of the ink cleaning agent. Specific examples of the inorganic base include sodium hydroxide and potassium hydroxide, and aqueous solutions of these compounds are preferably used. The aqueous sodium hydroxide solution and the aqueous potassium hydroxide solution preferably have a concentration of 0.1 wt% to 10 wt% and more preferably 0.1 wt% to 5 wt%. The pH is preferably 10 or more.

(Compound (b))

The compound (b), which is an alkylene glycol alkyl ether represented by general formula (2), is preferably contained in an amount of 10 wt% to 50 wt% relative to the total amount of the ink cleaning agent.

$$R2-O-[CH_2-CH(X2)-O]n2-H \qquad (2)$$

(In general formula (2), R2 represents an alkyl group having 3 or more carbon atoms, n2 represents an integer of 1 to 3, and X2 represents hydrogen or a methyl group.)
Among the alkylene glycol alkyl ethers represented by general formula (2), a water-soluble alkylene glycol alkyl ether is yet more preferable.
Examples of the water-soluble alkylene glycol alkyl ether represented by general formula (2) include ethylene glycol monomethyl ether, ethylene glycol monoethyl ether, ethylene glycol monopropyl ether, ethylene glycol monobutyl ether, ethylene glycol monobutyl ether, ethylene glycol-tert-butyl ether, diethylene glycol monomethyl ether, diethylene glycol monoethyl ether, diethylene glycol monopropyl ether, diethylene glycol monobutyl ether, diethylene glycol monobutyl ether, triethylene glycol monobutyl ether, propylene glycol monomethyl ether, propylene glycol monoethyl ether, propylene glycol monopropyl ether, and propylene glycol monobutyl ether.
Furthermore, when the compound (b) is used, R2 preferably represents an alkyl group having 3 or more carbon atoms, n2 preferably represents 1 to 3, and X2 preferably represents hydrogen or a methyl group from the viewpoint of maintaining the detaching property even when the composition is such that the water content relative to the total amount of the ink cleaning agent significantly exceeds 50 wt%.
Specific examples thereof include ethylene glycol monopropyl ether, ethylene glycol monobutyl ether, ethylene glycol-tert-butyl ether, diethylene glycol monopropyl ether, diethylene glycol monobutyl ether, triethylene glycol monobutyl ether, propylene glycol monopropyl ether, and propylene glycol monobutyl ether. These alkylene glycol alkyl ethers can be used alone or in combination as appropriate, and can be mixed with water and used.
Furthermore, among these, ethylene glycol mono-tert-butyl ether and propylene glycol monopropyl ether are particularly preferable from the viewpoints of environmental properties, flammability, and antifoaming properties.

(Compound (c))

The compound (c), which is a primary or secondary monoalkanolamine having a boiling point of 150 to 200°C, is preferably contained in an amount of 10 wt% to 50 wt% relative to the total amount of the ink cleaning agent.
Examples of the primary monoalkanolamine include monoethanolamine and 2-aminoisobutanol, examples of the secondary monoalkanolamine include N-methylethanolamine, 2-ethylaminoethanol, and isoprpanolamine, and any primary and secondary monoalkanolamines other than those listed as examples can be used as appropriate as long as the boiling point is within the range of 150°C to 200°C. These monoalkanolamine compounds can be used alone or in combination as appropriate, and can be mixed with water and used.

(Other surfactants)

The ink film cleaning agent used in the present invention may contain surfactants other than the aforementioned amphoteric surfactants and cationic surfactants. In particular, an amphoteric surfactant can exhibit an improved detaching effect when used in combination with other surfactants.

Other surfactants are not particularly limited, and examples thereof include anionic surfactants and nonionic surfactants. In particular, the amphoteric surfactant is preferably used in combination with a nonionic surfactant, a nonionic surfactant having an HLB value of 14 or less, a nonionic surfactant with HLB value of 13.5 or less, a nonionic surfactant with an HLB value of 13 or less, a nonionic surfactant with an HLB value of 10 or less, or a nonionic surfactant with an HLB value of 8.5 or less.

Here, the HLB value is a value that indicates the degree of affinity of a surfactant to water and oil (organic compounds insoluble in water), and is defined by the Griffin method (HLB value = 20 × total formula weight of hydrophilic parts/molecular weight).

When the amphoteric surfactant is used in combination with a nonionic surfactant, the amphoteric surfactant is preferably used in an alkaline aqueous solution containing sodium hydroxide or potassium hydroxide as the compound (a), and the HLB value of the nonionic surfactant is preferably 14 or less. In such an alkaline aqueous solution, the amphoteric surfactant is ionized into an anionic surfactant, and the anionic surfactant and the nonionic surfactant form a complex micelle. Presumably, this complex micelle decreases the surface tension between the ink films and the cleaning agent, increases the wettability, and thereby promotes the ink film detachment.

Common nonionic surfactants are, for example, polyoxyalkylene alkyl ether, polyoxyethylene alkyl ether, polyoxyethylene alkyl phenyl ether, octylphenol ethoxylate, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, sucrose fatty acid ester, polyoxyethylenealkylamine, polyoxyethylene fatty acid amide, fatty acid alkylolamide, alkylalkanolamide, acetylene glycol, oxyethylene adducts of acetylene glycol, and polyethylene glycol-polypropylene glycol block copolymers, and, among these, polyoxyethylene nonyl phenyl ether, polyoxyethylene octyl phenyl ether, polyoxyethylene dodecyl phenyl ether, polyoxyethylene alkyl ether, polyoxyethylene fatty acid ester, sorbitan fatty acid ester, polyoxyethylene sorbitan fatty acid ester, fatty acid alkylolamide, acetylene glycol, oxyethylene adducts of acetylene glycol, and polyethylene glycol-polypropylene glycol block copolymers are the examples.

More preferably, the nonionic surfactant is a polyoxyalkylene surfactant containing at least one compound represented by general formula (1).

$$R1\text{-}O\text{-}[CH_2\text{-}CH(X1)\text{-}O]n1\text{-}H \qquad (1)$$

In general formula (1), R1 represents a linear or branched alkyl group, alkenyl group, or octylphenol group, n1 represents an average number of moles added, and X1 represents hydrogen or a short-chain alkyl group.

In order to facilitate formation of a complex micelle when used in combination with an amphoteric surfactant, such a nonionic surfactant preferably has a long alkyl chain and a small number of moles of EO added.

In general formula (1), when R1 is a linear or branched alkyl or alkenyl group, the number of carbon atoms in R1 is preferably 10 or more. The higher the number of carbon atoms is than 10, the better the ink-detaching property. Specific examples of the number of carbon atoms include 10 in a decyl group, 12 in a lauryl group, 13 in a tridecyl group, 14 in a myristyl group, 16 in a cetyl group, and 18 in an oleyl group and a stearyl group.

The larger the number of carbon atoms in R1, the easier formation of a complex micelle with the amphoteric surfactant; however, if the molecular structure of the surfactant is excessively large, formation of a complex micelle with the amphoteric surfactant tends to become difficult, and thus the number of carbon atoms in R1 is preferably 14 or less when R1 is a linear or branched alkyl group or alkenyl group. To facilitate formation of a complex micelle with the amphoteric surfactant, more specifically, a surfactant having an HLB value of 10 or less is preferably used when the alkyl chain has 14 or more carbon atoms, a surfactant with an HLB value of 13 or less is preferably used when the alkyl chain has 12 or 13 carbon atoms, and a surfactant with an HLB value of 14 or less is preferably used when the alkyl chain has 11 or less carbon atoms.

Specific preferable examples of the products include, but are not limited to, nonionic surfactants represented by general formula (1) with R1 having 10 or more carbon atoms selected from among NOIGEN series, DSK NL-Dash series, and DKS-NL series produced by DKS Co. Ltd., NONION series produced by NOF CORPORATION, EMULGEN series produced by KAO Corporation, and LEOX series, LEOCOL series, and LIONOL series produced by Lion Corporation.

When R1 in general formula (1) is an octylphenol group, octylphenol ethoxylate is preferable.

Examples of the specific product include, but are not limited to, TRITON (registered trademark) series produced by The Dow Chemical Company, IGEPAL CA series produced by RHODIA, Nonidet P series produced by Shell Chemicals, and Nikkol OP series produced by Nikko Chemicals Co., Ltd.

In addition, when R1 is an octylphenol group, n1 in general formula (1) is preferably 8.0 or more. The value that n1 represents is preferably as large as 8.0 or more since wettability to the ink films is improved, and good ink-detaching property is obtained.

As described above, in order to detach ink films from laminates in a short time, it is preferable to use a surfactant that has an HLB value of 14 or less and is represented by general formula (1) above with R1 representing a group having 10 or more and 14 or less carbon atoms.

Specific examples of the nonionic surfactant represented by general formula (1) above with an HLB value of 14 or less and R1 representing a linear or branched alkyl or alkenyl group having 10 or more carbon atoms include, but are not limited to, the products of DKS Co. Ltd., such as NOIGEN XL-41, NOIGEN XL-61, NOIGEN XL-6190, NOIGEN XL-70, NOIGEN XL-80, NOIGEN LF-40X, NOIGEN LF-60X, NOIGEN LF-80X, NOIGEN TDS-30, NOIGEN TDS-50, NOIGEN TDS-70, NOIGEN TDS-80, NOIGEN TDS-100, NOIGEN TDX-50, NOIGEN TDX-80, NOIGEN TDX-80D, NOIGEN TDX-100D, NOIGEN SD-30, NOIGEN SD-60, NOIGEN SD-70, DKS NL-15, DKS NL-30, DKS NL-40, DKS NL-50, DKS NL-60, DKS NL-70, DKS NL-80, DKS NL-90, DKS NL-100, NOIGEN ET-83, NOIGEN ET-102, DSK Dash400, DSK Dash403, DSK Dash404, DSK Dash410, NOIGEN LP-55, NOIGEN LP-70, NOIGEN LP-80, NOIGEN LP-100, NOIGEN ET-65, NOIGEN ET-95, NOIGEN ET-115, NOIGEN ET-135, NOIGEN ET-69, NOIGEN ET-89, NOIGEN ET-109, NOIGEN ET-129, NOIGEN ET-149, and NOIGEN ET-159, the products of NOF CORPORATION such as NONION K-204, PERSOFT NK-60, PERSOFT NH-90C, PERSOFT NK-100, PERSOFT NK-100C, NONION P-208, NONION P-210, NONION E-202, NONION E-202S, NONION E-205, NONION E-205S, NONION E-212, NONION S-202, NONION S-207, NONION EH-204, NONION ID-203, NONION ID-206, Dispanol TOC, NONION HT-505, NONION HT-507, NONION HT-510, and NONION HT-512, the products of Kao Corporation such as EMULGEN 102KG, EMULGEN 103, EMULGEN 104P, EMULGEN 105, EMULGEN 106, EMULGEN 108, EMULGEN 109P, EMALGEN 210P, EMALGEN 320P, EMALGEN 404, EMALGEN 408, EMALGEN 409PV, EMULGEN 420, EMULGEN 705, EMULGEN 707, EMULGEN 709, and EMULGEN 1108, and the products of Lion Corporation such as LEOX CL-30, LEOX CL-40, LEOX CL-50, LEOX CL-60, LEOX CL-70, LEOX CL-90, LEOCOL NL-30C, LEOCOL TD-50, LEOCOL TD-70, LEOCOL TD-90, LEOCOL TD-90D, LEOCOL SC-80, LEOCOL SC-50, LEOCOL SC-70, LEOCOL SC-80, and LEOCOL SC-90.

Among the nonionic surfactants having an HLB value of 14.0 or less and represented by general formula (1) above, a specific example of a surfactant with R1 representing an octylphenol group having 10 or more carbon atoms is, but is not limited to, TRITON (registered trademark) X-100 produced by The Dow Chemical Company.

One of these other surfactants can be used in combination with an amphoteric surfactant, or a mixture of two or more of these other surfactants can be used in combination with an amphoteric surfactant. The amount thereof added relative to the total amount of the ink cleaning agent is preferably in the range of 0.01 to 5 wt% and more preferably 0.1 to 2 wt%.

(Antifoaming agent)

The ink film cleaning agent used in the present invention may contain an antifoaming agent. Large quantities of bubbles may occur during the process of detaching ink films from plastic substrates, during stirring, and during the crushing step described below, and if bubbles remain, overflow of bubbles may occur during the step of recovering plastic films and ink films. In addition, in the step of crushing plastic substrates, when large quantities of bubbles are entrapped in the cleaning agent, the plastic substrates may not be crushed to a desired size.

Water-soluble organic solvents and nonionic surfactants with low HLB values are compounds commonly used as the antifoaming agent; however, silicone compounds, which have high defoaming ability, are particularly preferable compounds. In particular, emulsion-type and self-emulsifying-type silicone compounds are preferred.

Examples of the specific antifoaming agent of the self-emulsifying type include, but are not limited to, X-50-1176, KS-530, and KS-537 produced by Shin-Etsu Chemical Co., Ltd., and examples of the specific antifoaming agents of the emulsion type include, but are not limited to, KM-7750D, KM-7752, and KM-98 produced by Shin-Etsu Chemical Co., Ltd., and FS Antifoam 025, FS Antifoam 80, FS Antifoam 92, FS Antifoam 93, DKQ1-1183, and DKQ1-1247 produced by Nagase Chemspec Co., Ltd.

(Ink cleaning agent temperature)

In the present invention, the temperature of the ink cleaning agent, in other words, the liquid temperature, is not particularly limited; however, since a higher liquid temperature offers a higher cleaning effect, the liquid temperature is preferably 50°C or higher, and the liquid temperature that offers a yet higher effect is 70°C or higher and more preferably 85°C or higher. The upper limit of the liquid temperature is not limited as long as the liquid state is maintained, but is usually preferably 90°C or lower.

(Detaching facility)

Since the ink cleaning agent described above can quickly penetrate into ink films and detach the ink films from films by causing the ink films to swell, the facility and the method with which the ink films are detached are not particularly limited; and specific examples of the facility include a facility equipped with a stirring blade-attached motor that can stir the ink cleaning agent in a container, a facility equipped with an ultrasonic generator, and a facility that can vigorously shake a container and its contents together. When ink detachment and crushing of plastic substrates are to be performed simultaneously, examples of the facility include a wet crusher and a colloid mill.

(Wet crusher)

One example of a wet crusher used for the ink film recovery method of the present invention is a wet crusher capable of crushing, dispersing, mixing, and pumping solid matter in liquid simultaneously. Specifically, a crusher that has a mechanism that crushes solid matter in liquid by using shear force and/or friction force is preferable, and a crusher that has a mechanism that can crush and pump plastic substrates is preferable. Examples of such a wet crusher include wet crushing pumps and colloid mills.

(Wet crushing pump)

The wet crushing pump used in the present invention preferably has a mechanism that crushes solid matter with a fixed blade and a rotating blade while pumping solid matter in liquid, and more preferable is a mechanism that performs crushing in three stages by a combination of four parts: a cutting blade, a crushing impeller, a shroud ring, and a grid.
Plastic substrates are crushed in three stages by using a wet crushing pump. The plastic substrates are roughly cut with a cutting blade of a fixed blade and an entry edge of the crushing impeller which is a rotating blade and then stirred and pumped by an axial flow-type crushing impeller. Some of the plastic substrates are cut as they hit the blade portion of the shroud ring which is a fixed blade. The laminate films that have passed through the crushing impeller are further finely crushed and stirred between the gratings, pass through the grid, are pressurized by a pressure impeller, and are then pumped to the next step.
Although the pumping speed is not particularly limited, the pumping speed is preferably 0.03 $m^3$/min or more in view of detaching ink films and detaching and detaching efficiency in separating plastic laminates containing laminated plastic substrates into individual layers. The upper limit of the pumping speed is not particularly limited, and even a standard operating speed of the facility, for example, 1.4 $m^3$/min, is sufficient for detaching ink and separating plastic laminates into individual layers.
The grid shape is not particularly limited. Since the grid bore diameter affects the size of the crushed laminate films, the grid bore diameter is preferably 0.1 to 50 mm, and more preferably 1 to 20 mm in view of the crushing efficiency and the size of the laminate films after crushing.
Specific examples of the wet crushing pump include KD series produced by Husqvama Zenoah Co. Ltd., SUNCUTTER series produced by Nikuni Corporation, disintegrator series produced by FURUKAWA INDUSTRIAL MACHINERY SYSTEMS Co., Ltd., INKRUSHER series produced by AIKAWA Iron Works Co., Ltd., and Scatter produced by Sanwa Hydrotech Corporation.

(Colloid mill)

The colloid mill used in the present invention is a machine used to reduce the particle size in a dispersion system in which particles are floating in a liquid. The colloid mill is constituted by a combination of a rotor and a stator, and the rotor rotates at high speed relative to the fixed stator. The colloid mill is used to reduce the particle size in the liquid by high shear generated by high-speed rotation.
The crushing portion of the colloid mill is constituted by a combination of a stator and a conical rotor with tooth, and the rotor and the stator have tapered shapes that narrow as they approach the discharge port. The plastic substrates are repeatedly subjected to strong shear, compaction, and impact within a ring-shaped gap that becomes narrow as the discharge port becomes closer, and are thereby crushed.
The colloid mill is not particularly limited as long as a dispersing machine generally referred to as a colloid mill is used, and specific examples of the colloid mill include colloid mill MK series produced by IKA, WCM series produced by IWAKI CO., LTD., PUC colloid mill series produced by MOUNTECH Co., Ltd., and Cavitron produced by EUROTEC.

(Crushing Mill)

The crushing mill used in the present invention is a machine used to crush solid matter in a system in which solid matter floats in a liquid, and has an appearance and a function of a food processor. The crushing mill is used to reduce the size of solid matter in the liquid by high shear generated by high-speed rotation of the rotating blade.

The specific crushing mill is not particularly limited as long as the mill is of a batch type and can crush solid matter in a liquid with a rotating blade, and examples thereof include MultiDrive series produced by IKA, and MIGHTY BLENDER series, WARING series, and various blender series produced by OSAKA CHEMICAL Co., Ltd.

Plastic laminates in which different types of plastics are laminated can be separated into individual films and plastic substrates by performing crushing with a wet crusher and a cleaning agent. Most plastic laminates contain adhesives and printing ink films to indicate product names and the like and to impart decoration value; thus, plastic laminates containing ink films are crushed in a cleaning agent so that the ink films can be more efficiently detached and removed. By crushing plastic laminates in a cleaning agent as such, detachment and removal of ink films in plastic laminates and separation of plastic laminates into individual layers can be simultaneously performed. Thus, even when a laminate has a structure in which the ink film is not the outermost layer but is present between two or more plastic substrates, the ink film can be detached and removed by a simple process. For example, printing ink films that contain gravure inks and flexo inks, which are most common inks used in plastic laminate films such as food packaging, can also be detached in the wet crushing step using the cleaning agent. Furthermore, although laminate films may contain foils and deposited films of metals such as aluminum, such foils and deposited films of metals can also be detached or dissolved in the present invention.

(Recovery facility)

The facility or method for recovering ink films are not particularly limited. In the present invention, since detached ink films settle out in the cleaning agent, a known method for removing sediments can be used as appropriate. Specifically, for example, a filtering machine, a centrifugal separator, or the like can be used.

The size of ink films detached by using the ink cleaning agent of the present invention varies depending on the conditions of the detaching facility used in the ink film detaching step; however, when the ink films are simply immersed in the cleaning agent, the ink films that have settled out are fragments having, for example, an average length of the longest portion of 10 $\mu$m or more, 100 $\mu$m or more, or 1000 $\mu$m or more. Thus, such fragments can be sufficiently separated with a filter with an aperture size of about 1 $\mu$m or larger, and the sediments can be easily removed.

Recovery of ink films and recovery of plastic substrates may be performed simultaneously or separately.

(Plastic substrate having ink film)

A plastic substrate having an ink film used in the ink film recovery method and the ink film detaching method of the present invention may be any plastic substrate with an ink film attached thereto. The ink film is, for example, a printing ink printed by a gravure printing machine, a flexo printing machine, an offset printing machine, an ink jet printing machine, or the like using an organic solvent-type printing ink or an aqueous or actinic rays-curable ink. The ink film may be a "multicolor print" ink film that uses multiple ink types.

The type of ink is not particularly limited, and the ink film can be detached by using the ink cleaning agent of the present invention irrespective of the type of the ink. When the ink cleaning agent of the present invention exhibits alkalinity when used with sodium hydroxide, potassium hydroxide, or the like, an ink containing a resin susceptible to alkali, for example, an ink that contains nitrocellulose in the resin, or an ink containing a resin having an acid number is preferable since detachment can be more easily carried out.

The material, shape, etc., of the plastic substrate are not particularly limited, and the plastic substrate may have a single-layer structure or may be a plastic laminate in which different types of plastics are laminated.

(Plastic laminate)

The plastic laminate used in the ink film recovery method and the ink film detaching method of the present invention has at least two layers, and is a laminate in which multiple layers such as an ink film, an adhesive layer, and other plastic layers are laminated on a plastic substrate. Such a laminate is not particularly limited, and an example thereof is a laminate film obtained by laminate-bonding with a reactive adhesive used in food packaging and houseware; however, a laminate film obtained by laminate-bonding with a non-reactive adhesive, for example, a thermoplastic resin adhesive, or a laminate film obtained by thermal fusion by an extrusion lamination method can also be separated into individual layer films and recovered by the separating and recovering method of the present invention. Alternatively, the laminate may have a sheet shape or a container shape.

Furthermore, a shrink label, which is a tubular laminate film, is used with a container such as a PET bottle in order to indicate the product name and the like and impart decoration value, and in most cases consumers remove shrink labels for recycling and discard shrink labels separate from the PET bottles; however, according to the ink film recovery method and the ink film detaching method of the present invention, the ink films can be detached and removed even when the PET bottles and shrink labels stay together. In particular, when a wet crusher is used, shrink labels can be separated from PET bottles simultaneously with ink detachment, and the shrink labels can be separated into single-layer films.

In a laminate film laminate-bonded with a reactive adhesive, an adhesive layer composed of the reactive adhesive is often interposed between at least two resin films, metal foils, or vapor-deposited films. Specifically, the following structures are conceivable as the concrete examples, but not limiting examples, of the laminate film, where a resin film layer is expressed as (F), a metal foil or a metal foil layer of a vapor-deposited film layer is expressed as (M), and an adhesive layer of the reactive adhesive or the like is expressed as (AD) in the laminate film.

(F)/(AD)/(F),

(F)/(AD)/(F)/(AD)/(F),

(F)/(AD)/(M)/(AD)/(F),

(F)/(AD)/(M),

(F)/(AD)/(F)/(AD)/(M)/(AD)/(F),

(F)/(AD)/(M)/(AD)/(F)/(AD)/(F),

(M)/(AD)/(M),

(M)/(AD)/(F)/(AD)/(M),

(AD)/(F)/(AD)/(M),

(AD)/(F)/(AD)/(F)/(AD), etc.

The plastic laminate used in the ink film recovery method and the ink film detaching method of the present invention has a structure in which an ink film is disposed on a resin film layer; however, the position of the ink film is not particularly limited. For example, the ink film may be the outermost layer of the laminate film, or may be interposed between a resin film layer (F) and an adhesive layer (AD).

The laminate film may further have a paper layer, an oxygen-absorbing layer, an anchor coating layer, an ink-releasing layer, or the like.

In terms of the role required to play, the resin film layer (F) functions as a substrate film layer (F1) or a sealant layer (F2) that constitutes a heat-sealing portion during formation of a packaging material.

Examples of the resin film that serves as the substrate film layer (F1) include polyolefin films such as low density polyethylene, high density polyethylene, linear low density polyethylene, OPP (biaxially stretched polypropylene), and CPP (unstretched polypropylene); polyester films such as polyethylene terephthalate (PET) and polybutylene terephthalate; polyamide films such as nylon 6, nylon 6,6, and metaxylene adipamide (N-MXD6); biodegradable films such as polylactic acid; polyacrylonitrile films; poly(meta)acrylic films; polystyrene films; polycarbonate films; saponified ethylene-vinyl acetate copolymer (EVOH) films; polyvinyl alcohol films; K Coat such as polyvinylidene chloride; and these films containing pigments. A transparent vapor-deposited film obtained by vapor-depositing alumina, silica, or the like on any of these films may also be used.

The surface of the film material described above may be subjected to various surface treatments such as a flame treatment, a corona discharge treatment, or a chemical treatment such as a primer treatment.

A flexible polymer film that serves as the sealant layer (F2) is preferably a polyolefin film such as a polyethylene film, a polypropylene film, or an ethylene-vinyl acetate copolymer, or a film of an ionomer resin, an EAA resin, an EMAA resin, an EMA resin, an EMMA resin, or a biodegradable resin. Common names of these films include CPP (unstretched polypropylene) films, VMCPP (aluminum vapor-deposited unstretched polypropylene film), LLDPE (linear low density polyethylene), LDPE (low density polyethylene), HDPE (high density polyethylene), VMLDPE (aluminum vapor deposited unstretched polyethylene film) films, and these films containing pigments. The surface of the film may be subjected to various surface treatments such as a flame treatment, a corona discharge treatment, or a chemical treatment such as a primer treatment.

Examples of the metal foil layer (M) include foils of metals having good ductility, such as gold, silver, copper, zinc, iron, lead, tin, alloys thereof, steel, stainless steel, and aluminum.

Examples of the paper layer include natural paper and synthetic paper. A first sealant layer and a second sealant layer may be composed of the same material as the aforementioned sealant layer.

Other layers may contain known additives and stabilizers, for example, an antistatic agent, a non-reactive adhesive layers, an easy adhesion coating agent, a plasticizer, a lubricant, and an antioxidant.

The ink film recovery method and the ink film detaching method of the present invention will now be described in detail through some examples of specific embodiments.

(Step 1: Ink film detaching step)

First, plastic substrates having ink films are immersed in an ink cleaning agent. The immersing time is in many cases within 60 minutes. In the present invention, the ink films do not have to completely detach from the films, and some of the ink films may remain on the films as long as the films can be recovered in step 2 mentioned below and as long as the subsequent recycling step can be carried out without difficulty. Specifically, it is sufficient if 75 wt% or more of the ink films are detached from the laminate films. Since the ink film detaching time can be shortened by using the cleaning agent of the present invention containing an amphoteric surfactant, the immersing time may be 30 minutes or less, 15 minutes or less, 10 minutes or less, or 5 minutes or less as long as the ink films are detached.

In step 1, immersing in the ink cleaning agent may be performed once or multiple times. Step 2 of recovering the separated films and ink films may be performed after performing immersing once or multiple times. In addition, when immersing is performed multiple times in step 1, the type and concentration of the ink cleaning agent may be changed. Furthermore, known steps such as washing with water, draining water, removing water, and drying may be added as appropriate between these steps.

In step 1, the aforementioned wet crusher or ultrasonic cleaner may be used.

(Step 2: step of recovering separated films and ink films)

The ink films separated from the plastic substrates do not dissolve in the ink cleaning agent but settle out as residues in the ink cleaning agent. In other words, in the ink cleaning agent in step 1, detached films and residues such as printing inks float or settle out. These are taken out from the cleaning solution, sorted, and recovered.

One specific example of a method for sorting plastic substrate types involves flotation separation in which plastics with light specific gravity (floats) such as polyolefin, for example, polypropylene and polyethylene, are separated from heavy substances such as condensation-synthesized films heavier than polyolefin, for example, polyester and nylon, and detached inks, and the heavy substances are removed.

For example, PP and PE, which have a lower specific gravity than water, float, and only films and ink films with a heavier specific gravity than water settle out; thus, only films with light specific gravities can be easily recovered with a flotator or the like.

Next, plastics recovered in the cleaning and draining step are cleaned, drained, and centrifuged to separate plastics with different specific gravities. For example, the plastics can be separated into a plastic isolate containing vinyl chloride resins, polyethylene terephthalate, etc., that have a specific gravity of 1 or more and sink in water, and a plastic isolate containing olefin resins such as polyethylene and polypropylene that contain no vinyl chloride resins.

Further sorting is possible by changing the liquid used in flotation separation, for example, changing the blend ratio of water and an organic solvent or a salt as appropriate.

After rough sorting and recovery by specific gravity separation, more sophisticated sorting may be conducted by triboelectrostatic separation using specific charging characteristics of plastics.

A specific example of the method is a separation method that involves dropping a pre-charged plastic mixture between parallel plate electrodes to which voltage is applied. According to specific gravity separation, a mixture of plastics with small specific gravity differences that are difficult to separate by specific gravity separation can be sorted.

(Step 3: Recovery and reuse of cleaning solution)

The ink cleaning agent used in steps 1 and 2 is fed to at least one cleaning agent recycling machine selected from a filtering machine, a centrifugal separator, and an ultrafiltration machine to recover the ink cleaning agent, and reused after the solid matter and the residue concentrates are removed. In steps 1 and 2, while performing the ink film detaching step and the specific gravity separation step, the step of reusing the cleaning agent can be continuously operated to separate solid matter and residue concentrates from the ink cleaning agent.

(Step 4: Drying plastic isolate)

After separating various plastic isolates in step 2, film drying selected from vacuum heat drying, hot air drying, and pressure compaction drying is performed to remove remaining water. These methods can be used in combination. As a preliminarily treatment for preparing recycle pellets in step 5, briquettes may be made by using a pressure compaction machine such as a briquetting machine after or during film drying.

The ink cleaning agent used in the present invention contains an amphoteric surfactant and thus improves wettability to various types of ink films such as ink cured films. Furthermore, presumably, the ink cleaning agent acts at the interface between the ink film and the plastic substrate and dramatically decreases the adhesion force to cause interfacial detachment. Since interfacial detachment has occurred, separation and recovery can be performed efficiently in a short time. Moreover, since the ink cleaning agent contains one selected from an amphoteric surfactant and a cationic surfactant, the detached ink films remain undissolved in the ink cleaning agent and settle out. Thus, the sediments of the ink films can be easily recovered and discarded after the cleaning step, and the ink cleaning agent can be recycled as many times as necessary. Presumably, a cleaning agent that contains one selected from an amphoteric surfactant and a cationic surfactant has an excellent ink film-detaching property and is outstandingly quick compared to other surfactants such as a nonionic surfactant, and easily forms a complex micelle when used in combination with another surfactant, thus promoting detachment of the ink film.

EXAMPLES

The contents and effects of the present invention will now be described in further detail through Examples.

First, the study using amphoteric surfactants is described below. The films, printing inks, and reactive adhesives used as raw materials in Examples and Comparative Examples are as follows.

(Films used in laminate film)

OPP: biaxially stretched polypropylene film: 20 $\mu$m
CPP: unstretched polypropylene film: 35 $\mu$m
VMCPP: aluminum vapor-deposited unstretched polypropylene film: 25 $\mu$m

(Printing inks)

INK 11: Gravure ink GROSSA 507 indigo S2 produced by DIC Graphics Corporation
INK 12: Gravure ink GROSSA BM709 white produced by DIC Graphics Corporation
INK 13: Gravure ink CHORUS 507 primary color indigo KT2 produced by DIC Graphics Corporation
INK 14: Gravure ink FINELAP NTV white RD-2 produced by DIC Graphics Corporation
INK 15: FINART R507 primary color indigo produced by DIC Graphics Corporation
INK 16: FINART R794 white S produced by DIC Graphics Corporation

(Reactive Adhesive)

AD 1: two-component-type adhesive (ether adhesive) containing solvent-type adhesive DICDRY LX-401A and SP-60
AD 2: two-component-type adhesive (ester adhesive) containing solventless adhesive DICDRY 2K-SF-400A and HA-400B

(Method for producing laminate film)

A laminate film was prepared by applying inks onto subject films by a printing method described below and bonding the subject films together by a lamination method described below. Combinations of the layer structure of the film and the types of the reactive adhesives and printing inks were as indicated in Table 1.

(Printing method)

Each of the gravure inks, which were printing inks, was drawndown onto films "Film 1" by using a proofer.

(Lamination method)

A reactive adhesive "AD" was applied by a laminator to the surface of the film "Film 1" onto which the printing ink was drawndown so that the coating amount in terms of solid content was 3 g/m2, and the film "Film 1" was bonded with a film "Film 2". The bonded laminate film was aged at 40°C for 72 hours. As a result, laminate films "LAM 11" to "LAM 18" indicated in Table 1 were obtained. Blank cells indicate absence of the corresponding features.

[Table 1]

| Table 1<br>Laminate film structure | Film 1 | Ink 1 | Ink 2 | Ad | Film 2 |
|---|---|---|---|---|---|
| LAM 11 | OPP | INK 11 | INK 12 | | |
| LAM 12 | OPP | INK 13 | INK 14 | | |
| LAM 13 | OPP | INK 15 | INK 16 | | |
| LAM 14 | OPP | INK 15 | INK 16 | AD 1 | CPP |
| LAM 15 | OPP | INK 15 | INK 16 | AD 1 | VMCPP |
| LAM 16 | OPP | INK 15 | INK 16 | AD 2 | VMCPP |
| LAM 17 | OPP | INK 11 | | | |
| LAM 18 | OPP | INK 12 | | | |

The laminate films "LAM 11" to "LAM 18" were cut into 2 cm × 6 cm-sized specimens.

(Cleaning agent temperature)

The liquid temperature of the cleaning agent used in the detaching step was set to 50°C.

(Cleaning step)

PRO 11: Pumped at 0.1 m$^3$/min using SUNCUTTER C125H produced by Nikuni Corporation.
PRO 12: Immersed at 28 kHz for 5 minutes by using an ultrasonic cleaner.
PRO 13: Gently immersed in the cleaning agent.
PRO 14: MultiDrive produced by IKA was operated for 1 minute at 20000 rpm.

(Ink cleaning agent)

Water, 0.3 wt% of the surfactant indicated in Table 2, and 2 wt% of sodium hydroxide were mixed to prepare ink cleaning agents of Examples 1 to 3 and 6 to 9 and Comparative Examples 1 to 6.
In Examples 4 and 5, ink cleaning agents of Examples 4 and 5 were prepared as in Example 1 except that the surfactant 1 and the surfactant 2 were each used in an amount of 0.15 wt%.

[Table 2]

| Table 2<br>Type of surfactant | Product name | Structure | HLB value | Manufacturer |
|---|---|---|---|---|
| SUR 11 | DKS NL Dash 403 | Nonionic surfactant | 6.5 | DKS Co. Ltd. |

(continued)

| Table 2 Type of surfactant | Product name | Structure | HLB value | Manufacturer |
|---|---|---|---|---|
| SUR 12 | Triton X-100 | Nonionic surfactant | 13.4 | The Dow Chemical Company |
| SUR 13 | AMOGEN S-H | Amphoteric surfactant | - | DKS Co. Ltd. |
| SUR 14 | NISSAN ANON BDF-R | Amphoteric surfactant | - | NOF CORPORATION |

(Removability of ink from laminate films)

Result 1 in Tables 3 to 5 shows how much inks had been removed from the laminate films. After the laminated films were cleaned and dried in the cleaning step, the ink removability in the printed portion was evaluated by calculating, by image processing, the area from a photograph taken with an optical microscope and then determining the ink removal rate from the following equation.

$$\text{Ink removal rate (\%)} = (1 - \text{area having ink attached after cleaning/area having ink attached before cleaning}) \times 100$$

∘: The ink had been removed from 100% of the printed portion.
∘Δ: The ink had been removed from 75 to 99% of the printed portion.
Δ: The ink had been removed from 50% to 74% of the printed portion or the laminate portion.
×: The ink had been removed from 0 to 49% of the printed portion or the laminate portion.

Here, ∘ and ∘Δ are ranges that do not pose practical problems.

(Ink film-detaching property)

Result 2 in Tables 3 to 5 indicate the state of the dissolved ink films or detached ink films when the cleaning agent was left standing for 1 hour after the detaching step. All of the cleaning agent after the ink film detaching test was filtered with a 1 μm filter, and the state of the dissolved or detached ink films was evaluated.

∘: The detached ink films are captured with a filter, and the filtrate is colorless and transparent.
×: The dissolved ink films cannot be captured with a filter, and the filtrate is colored.

Here, ∘ indicates the range that does not pose practical problems.

[Table 3]

| Component | Example 1 | Example 2 | Example 3 | Example 4 | Example 5 | Example 6 | Example 7 | Comparative Example 1 | Comparative Example 2 |
|---|---|---|---|---|---|---|---|---|---|
| Laminate film structure | LAM 17 | LAM 18 | LAM 17 | LAM 18 | LAM 17 | LAM 18 | LAM 17 | LAM 17 | LAM 17 |
| Cleaning step | PRO 13 | PRO 13 | PRO 13 | PRO 13 | PRO 13 | PRO 13 | PRO 13 | PRO 13 | PRO 13 |
| Surfactant 1 | SUR 13 | SUR 13 | SUR 13 | SUR 13 | SUR 13 | SUR 13 | SUR 14 | None | None |
| Surfactant 2 | | | SUR 11 | SUR 11 | SUR 12 | SUR 12 | | | |
| Test temperature | 50 | 50 | 50 | 50 | 50 | 50 | 50 | 50 | 70 |
| Result 1 | ○ | ○ | ○ | ○ | ○ | ○ | ○ | × | Δ |
| Detaching time/min | 10 | 10 | 3 | 3 | 3 | 3 | 10 | - | 15 |
| Result 2 | ○ | ○ | ○ | ○ | ○ | ○ | ○ | | ○ |

[Table 4]

| Component | Example 8 | Example 9 | Example 10 | Example 11 | Example 12 | Example 13 | Example 14 | Example 15 | Example 16 | Example 17 |
|---|---|---|---|---|---|---|---|---|---|---|
| Laminate film structure | LAM 11 | LAM 12 | LAM 13 | LAM 12 | LAM 13 | LAM 13 | LAM 14 | LAM 15 | LAM 16 | LAM 14 |
| Cleaning step | PRO 13 | PRO 13 | PRO 13 | PRO 13 | PRO 13 | PRO 12 | PRO 11 | PRO 11 | PRO 11 | PRO 14 |
| Surfactant 1 | SUR 13 | SUR 13 | SUR 13 | SUR 13 | SUR 13 | SUR 13 | SUR 13 | SUR 13 | SUR 13 | SUR 13 |
| Surfactant 2 | | | | SUR 12 | SUR 12 | | | | | |
| Test temperature | 70 | 70 | 70 | 70 | 70 | 70 | 70 | 70 | 70 | 70 |
| Result 1 | ○ | ○ | ○ | ○ | ○ | ○ | ○ | ○ | ○ | ○ |
| Detaching time/min | 3 | 5 | 15 | 3 | 10 | 3 | 1 | 1 | 1 | 1 |
| Result 2 | ○ | ○ | ○ | ○ | ○ | ○ | ○ | ○ | ○ | ○ |

[Table 5]

| Component | Comparative Example 3 | Comparative Example 4 | Comparative Example 5 | Comparative Example 6 |
|---|---|---|---|---|
| Laminate film structure | LAM 11 | LAM 11 | LAM 12 | LAM 12 |
| Cleaning step | PRO 13 | PRO 13 | PRO 13 | PRO 13 |
| Surfactant 1 | SUR 11 | SUR 12 | SUR 11 | SUR 12 |
| Surfactant 2 | | | | |
| Test temperature | 70 | 70 | 70 | 70 |
| Result 1 | Δ | Δ | Δ | Δ |
| Detaching time/min | 15 | 15 | 15 | 15 |
| Result 2 | × | ○ | × | × |

Examples 1 to 17 show that ink films could be detached from LAM 11, 13, 17, and 18 having laminate film structures by using SUR 13 and SUR 14 which were amphoteric surfactants. In addition, Examples 14 to 16 show that the ink films could be detached from LAM 14 to 16, in which an ink film was interposed between two films, through PRO 11. However, in Comparative Example 1 in which no amphoteric surfactant was used, the ink films could not be detached. Without an amphoteric surfactant, the ink films could not be detached even when the temperature of the cleaning agent was increased to 70°C as in Comparative Example 2.

Examples 8 to 17 show that SUR 13, which was an amphoteric surfactant, could detach ink films from LAM 11 to 16 obtained by multilayer printing with multiple inks of different colors. In addition, Examples 11 and 12 show that, by using a cleaning agent that also contains a nonionic surfactant, the ink film-detaching property was improved, and the detaching time could be shortened.

Meanwhile, Comparative Examples 3 to 6 show that SUR 11 and 12, which were nonionic surfactants, could not sufficiently remove ink films as indicated by Result 1, or could not detach the ink films as indicated by Result 2 since the ink films could not be captured with a filter and the filtrate was colored. It was demonstrated that since films could be detached by using the ink film cleaning agent of the present invention, the ink films and the ink cleaning agent could be easily recovered by using a filter.

Next, the study using cationic surfactants is described below.

(Films used in laminate film)

OPP: biaxially stretched polypropylene film: 20 μm
CPP: unstretched polypropylene film: 35 μm
PET: Polyethylene terephthalate film: 12 μm
VMCPP: aluminum vapor-deposited unstretched polypropylene film: 25 μm

(Printing inks)

INK 21: Gravure ink CHORUS 507 primary color indigo KT2 produced by DIC Graphics Corporation
INK 22: two-component curable ink containing gravure ink FINLAP NTV white RD-2 produced by DIC Graphics Corporation and a curing agent, CVL hardener #10, produced by DIC Corporation
INK 23: FINART R507 primary color indigo produced by DIC Graphics Corporation
INK 24: two-component curable ink containing FINART R794 white S produced by DIC Graphics Corporation and a curing agent, CVL hardener #10, produced by DIC Corporation

(Reactive adhesive)

AD 1: two-component-type adhesive (ether adhesive) containing solvent-type adhesive DICDRY LX-401A and SP-60
AD 2: two-component-type adhesive (ester adhesive) containing solventless adhesive DICDRY 2K-SF-400A and HA-400B

(Method for producing laminate film)

A laminate film was prepared by applying inks onto subject films by a printing method described below and bonding the subject films together by a lamination method described below. Combinations of the layer structure of the film and the types of the reactive adhesives and printing inks were as indicated in Table 6.

(Printing method)

Each of the gravure inks, which were printing inks, was drawndown onto films "Film 1" by using a proofer.

(Lamination method)

A reactive adhesive "AD" was applied by a laminator to the surface of the film "Film 1" onto which the printing ink was drawndown so that the coating amount in terms of solid content was 3 g/m$^2$, and the film "Film 1" was bonded with a film "Film 2". The bonded laminate film was aged at 40°C for 72 hours. As a result, laminate films "LAM 21" to "LAM 28" indicated in Table 6 were obtained. Blank cells indicate absence of the corresponding features.

[Table 6]

| Laminate film structure | Film 1 | Ink 1 | Ink 2 | Ad | Film 2 |
|---|---|---|---|---|---|
| LAM 21 | OPP | INK 21 | INK 22 | | |
| LAM 22 | OPP | INK 23 | INK 24 | | |
| LAM 23 | PET | INK 21 | INK 22 | | |
| LAM 24 | OPP | INK 23 | INK 24 | AD 1 | CPP |
| LAM 25 | OPP | INK 23 | INK 24 | AD 1 | VMCPP |
| LAM 26 | OPP | INK 23 | INK 24 | AD 2 | VMCPP |
| LAM 27 | OPP | INK 21 | | | |
| LAM 28 | OPP | INK 22 | | | |

The laminate films "LAM 21" to "LAM 28" were cut into 2 cm × 6 cm-sized specimens.

(Cleaning agent temperature)

The liquid temperature of the cleaning agent used in the detaching step was set to 50°C.

(Cleaning step)

PRO 21: Pumped at 0.1 m$^3$/min using SUNCUTTER C125H produced by Nikuni Corporation.
PRO 22: MultiDrive produced by IKA was operated for 1 minute at 10000 rpm.
PRO 23: Gently immersed in the cleaning agent for 15 minutes.

(Ink cleaning agent)

Water, 0.3 wt% of the surfactant indicated in Table 7, and 2 wt% of sodium hydroxide were mixed to prepare ink cleaning agents of Examples and 18 to 26 and Comparative Examples 7 to 9.

[Table 7]

| Type of surfactant | Product name | Structure | Manufacturer |
|---|---|---|---|
| SUR 11 | DKS NL Dash 403 | Nonionic surfactant | DKS Co. Ltd. |
| SUR 12 | NONION E-215 | Nonionic surfactant | NOF CORPORATION |
| SUR 13 | VB-F | Cationic surfactant | NOF CORPORATION |
| SUR 14 | M2-100R | Cationic surfactant | NOF CORPORATION |

(Removability of ink from laminate films)

Result 1 in Tables 8 to 10 shows how much inks had been removed from the laminate films. After the laminated films were cleaned in the cleaning step, rubbed with a cotton swab at an angle of 45° and a pressing force of 500 g by 20 reciprocal motions, and dried, the ink removability in the printed portion was evaluated by calculating, by image processing, the area from a photograph taken with an optical microscope and then determining the ink removal rate from the following equation.

Ink removal rate (%) = (1 - area having ink attached after cleaning/area having ink attached before cleaning) ×

100

∘: The ink had been removed from 100% of the printed portion.
∘ Δ: The ink had been removed from 75 to 99% of the printed portion.
Δ: The ink had been removed from 50% to 74% of the printed portion or the laminate portion.
✕: The ink had been removed from 0 to 49% of the printed portion or the laminate portion.

Here, ∘ and ∘ Δ are ranges that do not pose practical problems.

(Ink film-detaching property)

Result 2 in Tables 3 to 5 indicate the state of the dissolved ink films or detached ink films when the cleaning agent was left standing for 1 hour after rubbing with a cotton swab at an angle of 45° and a pressing force of 500 g for 20 reciprocal motions in the cleaning agent after the cleaning step. All of the cleaning agent after the ink film detaching test was filtered with a 1 $\mu$m filter, and the state of the dissolved or detached ink films was evaluated.

∘: The detached ink films are captured with a filter, and the filtrate is colorless and transparent.
✕: The dissolved ink films cannot be captured with a filter, and the filtrate is colored.

Here, ∘ indicates the range that does not pose practical problems.

[Table 8]

| Component | Example 18 | Example 19 | Example 20 | Example 21 | Example 22 |
|---|---|---|---|---|---|
| Laminate film structure | LAM 21 | LAM 22 | LAM 23 | LAM 27 | LAM 28 |
| Cleaning step | PRO 23 | PRO 23 | PRO 23 | PRO 23 | PRO 23 |
| Surfactant | SUR 24 | SUR 24 | SUR 24 | SUR 24 | SUR 24 |
| Test temperature | 70 | 70 | 70 | 70 | 70 |
| Result 1 | ○ | ○ | ○ | ○ | ○ |
| Result 2 | ○ | ○ | ○ | ○ | ○ |

[Table 9]

| Component | Example 23 | Example 24 | Example 25 | Example 26 |
|---|---|---|---|---|
| Laminate film structure | LAM 24 | LAM 25 | LAM 26 | LAM 24 |
| Cleaning step | PRO 22 | PRO 22 | PRO 22 | PRO 21 |
| Surfactant | SUR 24 | SUR 23 | SUR 24 | SUR 24 |
| Test temperature | 50 | 50 | 50 | 50 |
| Result 1 | ○ | ○ | ○ | ○ |
| Result 2 | ○ | ○ | ○ | ○ |

[Table 10]

| Component | Comparative Example 7 | Comparative Example 8 | Comparative Example 9 |
|---|---|---|---|
| Laminate film structure | LAM 21 | LAM 21 | LAM 21 |
| Cleaning step | PRO 23 | PRO 23 | PRO 21 |
| Surfactant | SUR 21 | SUR 22 | SUR 22 |
| Test temperature | 70 | 70 | 50 |
| Result 1 | × | × | × |
| Result 2 | - | - | - |

Examples 18, 19, and 20 show that ink films could be detached even from LAM 21, 22, and 23, in which thermosetting inks of multiple colors had been printed, by using a cationic surfactant SUR 24. Examples 21 and 22 show that ink films of a thermosetting type and a thermoplastic type could be detached even from LAM 27 and 28 in which single-color ink was printed. In addition, Examples 23 to 26 show that the ink films could be detached from LAM 24 to 26, in which a thermosetting ink film was interposed between two films, by using PRO 21 or PRO 22. However, in Comparative Examples 7 to 9 in which no cationic surfactant was used, the ink films could not be detached.

**Claims**

1. An ink film recovery method comprising detaching and removing, from a plastic substrate having an ink film, the ink film by using an ink cleaning agent containing water and at least one surfactant selected from an amphoteric surfactant and a cationic surfactant, and then recovering the detached ink film.

2. The ink film recovery method according to Claim 1, wherein the amphoteric surfactant contains at least one compound represented by general formula (1a):

$$R1\text{-}R2\text{-}N^+(CH_3)_2CH_2COO^- \qquad (1a)$$

(In general formula (1a), R1 represents hydrogen or C(=O)R3-NH- (R3 represents a linear or branched alkyl or alkenyl group), and R2 represents an alkylene group or an alkenylene group.)

3. The ink film recovery method according to Claim 1 or 2, wherein the amphoteric surfactant is an alkylcarboxybetaine skeleton amphoteric surfactant that contains at least one compound represented by general formula (1a-1):

$$C_nH_{2n+1}N^+(CH_3)_2CH_2COO^- \qquad (1a\text{-}1)$$

(In general formula (1a-1), n represents an average number of moles added.)

4. The ink film recovery method according to Claim 3, wherein the alkylcarboxybetaine skeleton amphoteric surfactant contains at least one compound represented by general formula (1a-1) with n representing 10 or more.

5. The ink film recovery method according to any one of Claims 2 to 4, wherein a nonionic surfactant is further contained.

6. The ink film recovery method according to Claim 1, wherein the cationic surfactant contains at least one compound represented by a quaternary ammonium skeleton.

7. The ink film recovery method according to Claim 1 or 6, wherein the cationic surfactant contains at least one compound represented by general formula (2a) or a salt thereof:

$$R1-N^+(R2R3)-R4 \qquad (2a)$$

(In general formula (2a), R1 represents a linear or branched alkyl group or a linear or branched alkenyl group, at least one $-CH_2-$ in the alkyl or alkenyl group may be substituted with $-C(=O)-$, $-NH-$, or $-C(=O)-NH-$, R2 and R3 each represent a hydrogen atom, a linear or branched alkyl group, or a linear or branched alkenyl group, R4 represents a hydrogen atom, a linear or branched alkyl group, a linear or branched alkenyl group, or a phenyl group, and a terminal $-CH_3$ in the alkyl or alkenyl group may be substituted with a carboxy group or a phenyl group.)

8. The ink film recovery method according to Claim 1, 6, or 7, wherein the cationic surfactant is a quaternary ammonium skeleton cationic surfactant that contains at least one compound represented by general formula (2a-1) or a salt thereof:

$$C_nH_{2n+1}N^+(CH_3)_2R4 \qquad (2a-1)$$

(In general formula (2a-1), n represents an average number of moles added, and R4 is the same as R4 in general formula (2a) described in Claim 7.)

9. The ink film recovery method according to Claim 8, wherein, in general formula (2a-1), n is 8 or more.

10. The ink film recovery method according to any one of Claims 1 to 9, wherein the ink cleaning agent contains one compound selected from (a) to (c):

   (a) an inorganic base in an amount of 0.1 to 10 wt% relative to a total amount of the ink remover;
   (b) an alkylene glycol alkyl ether represented by general formula (2) in an amount of 10 wt% to 50 wt% relative to the total amount of the ink remover:

$$R^2-O-[CH_2-CH(X^2)-O]n^2-H \qquad (2)$$

   (In general formula (2), $R^2$ represents an alkyl group having 3 or more carbon atoms, $n^2$ represents an integer of 1 to 3, and $X^2$ represents hydrogen or a methyl group.); and
   (c) a primary or secondary monoalkanolamine with a boiling point of 150 to 200°C in an amount of 10 wt% to 50 wt% relative to the total amount of the ink remover.

11. The ink film recovery method according to any one of Claims 1 to 10, wherein the ink film is detached by using the ink cleaning agent having a temperature of 50°C or higher.

12. An ink cleaning agent used in the ink film recovery method according to any one of Claims 1 to 11, the ink cleaning agent comprising an amphoteric surfactant and water.

13. An ink film detaching method comprising detaching and removing, from a plastic substrate having an ink film, the ink film by using an ink cleaning agent used in the ink film recovery method according to any one of Claims 1 to 11.

## INTERNATIONAL SEARCH REPORT

| International application No. |
| --- |
| **PCT/JP2021/030321** |

### A. CLASSIFICATION OF SUBJECT MATTER

**B29B 17/00**(2006.01)i; **B29B 17/02**(2006.01)i; **C11D 1/62**(2006.01)i; **C11D 1/72**(2006.01)i; **C11D 1/90**(2006.01)i; **C11D 1/94**(2006.01)i; **C11D 3/30**(2006.01)i

FI: B29B17/02 ZAB; C11D1/72; C11D1/94; C11D3/30; C11D1/62; C11D1/90; B29B17/00 ZAB

According to International Patent Classification (IPC) or to both national classification and IPC

### B. FIELDS SEARCHED

Minimum documentation searched (classification system followed by classification symbols)

B29B17/00; B29B17/02; C11D1/62; C11D1/72; C11D1/90; C11D1/94; C11D3/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 08-100140 A (SHIYACHIHATA KOGYO KK) 16 April 1996 (1996-04-16) claim 1, paragraphs [0001], [0006], [0011], [0013], [0019] | 1-2, 5, 10, 12-13 |
| A | | 3-4, 6-9, 11 |
| X | WO 2020/066652 A1 (DAINIPPON INK & CHEMICALS) 02 April 2020 (2020-04-02) paragraphs [0007], [0014], [0015], [0019], [0028], [0030] | 1, 5, 10-13 |
| A | | 2-4, 6-9 |
| A | JP 2013-028880 A (OJI HOLDINGS CORP.) 07 February 2013 (2013-02-07) entire text | 1-13 |
| A | JP 2000-127419 A (SEIKO EPSON CORP.) 09 May 2000 (2000-05-09) entire text | 1-13 |
| A | JP 2016-060156 A (SAKATA INKS) 25 April 2016 (2016-04-25) entire text | 1-13 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 November 2021** | **16 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2021/030321** |

**C.    DOCUMENTS CONSIDERED TO BE RELEVANT**

| Category* | Citation of document, with indication, where appropriate, of the relevant passages | Relevant to claim No. |
|---|---|---|
| A | JP 2003-253298 A (NICCA CHEMICAL CO., LTD.) 10 September 2003 (2003-09-10)<br>entire text | 1-13 |

Form PCT/ISA/210 (second sheet) (January 2015)

**INTERNATIONAL SEARCH REPORT**
Information on patent family members

International application No.

**PCT/JP2021/030321**

| Patent document cited in search report | | | Publication date (day/month/year) | Patent family member(s) | | | Publication date (day/month/year) |
|---|---|---|---|---|---|---|---|
| JP | 08-100140 | A | 16 April 1996 | (Family: none) | | | |
| WO | 2020/066652 | A1 | 02 April 2020 | JP | 6777263 | B2 | |
| | | | | US | 2021/0178744 | A1 | |
| | | | | paragraphs [0012], [0019], [0021], [0025], [0035], [0038] | | | |
| JP | 2013-028880 | A | 07 February 2013 | (Family: none) | | | |
| JP | 2000-127419 | A | 09 May 2000 | (Family: none) | | | |
| JP | 2016-060156 | A | 25 April 2016 | US | 2017/0275561 | A1 | |
| | | | | WO | 2016/042883 | A1 | |
| | | | | EP | 3196028 | A1 | |
| JP | 2003-253298 | A | 10 September 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001031899 A
- JP 2020066652 A
- JP 10280179 A
- JP 8123043 A

- JP 8245989 A
- JP 9087668 A
- JP 2006083351 A

**Non-patent literature cited in the description**

- *Science Advances,* 19 July 2017, vol. 3 (7), e1700782